# EUROPÄISCHE PATENTSCHRIFT

(11) **EP 0 711 324 B1**
(45) Veröffentlichungstag und Bekanntmachung des Hinweises auf die Patenterteilung: **03.06.1998**
(21) Anmeldenummer: 94921647.7
(22) Anmeldetag: 14.07.1994
(51) Int. Cl.: C08L 3/02

(54) **VERSTÄRKTES BIOLOGISCH ABBAUBARES POLYMER**
REINFORCED BIODEGRADABLE POLYMER
POLYMERE BIODEGRADABLE RENFORCE

(30) Priorität: 28.07.1993 CH 2281/93
(43) Veröffentlichungstag der Anmeldung: 15.05.1996
(73) Patentinhaber: Bio-tec Biologische Naturverpackungen GmbH, D-46446 Emmerich (DE)
(72) Erfinder: TOMKA, Ivan, CH-1722 Bourguillon (CH)
(74) Vertreter: Troesch Scheidegger Werner AG
(86) Internationale Anmeldenummer: EP9402321
(87) Internationale Veröffentlichungsnummer: WO9504106

(56) Entgegenhaltungen:
- EP-A- 0 319 589
- EP-A- 0 535 994
- EP-A- 0 551 954
- EP-A- 0 587 078
- WO-A-92/10246
- WO-A-95/04104
- CHEMICAL ABSTRACTS, vol. 119, no. 18, 1. November 1993, Columbus, Ohio, US; abstract no. 181893, & CHEM. MAG., Bd.9, 1992, RIJSWIJK, NL Seiten 446 - 448
- CHEMISCH MAGAZINE, BIJLAGE BIJ CHEMISCH WEEKBLATT 36, SEPTEMBER 1992, vol., no., , page 446 - 448, RIANNE TEULE 'ZETMEELPLASTICS'

## Beschreibung

Die vorliegende Erfindung betrifft ein verstärktes, im wesentlichen biologisch abbaubares nicht geschäumtes Polymer sowie ein Verfahren zu dessen Herstellung.

Biologisch abbaubare Polymere wie Stärke, Gelatine, Cellulosederivate, usw. oder Mischungen davon sind daran, sich als polymere Werkstoffe neben den bekannten Kunststoffen zu etablieren, allerdings vorderhand nur bei sehr spezifischen Anwendungen, wie für die Verkapselung von Wirkstoffen wie Medikamente, als Verpackungsmaterialien bzw. Verpackungshilfsstoffe ohne besondere mechanische Anforderungen, als Essgeschirr, Becher und dergleichen. Für technische Anwendungen als sog. "engineering plastics" ist ihr Einsatz aufgrund der im Vergleich zu den Bekannten Kunststoffen eher mässigen mechanischen Eigenschaften, wie Druck- und Zugfestigkeit, sehr eingeschränkt.

Eine Möglichkeit der Verbesserung dieser Eigenschaften Besteht im Verstärken der biologisch abbaubaren Polymeren, eine Technik, die aus der Kunststoffanwendungstechnik bereits bekannt ist. Als Verstärkungsmaterialien stehen vor allem Glasfasern bzw. -Kugeln im Vordergrund, neuerdings auch Kohlenstoffasern und sogenannte Aramidfasern. Diese Verstärkungsmittel sind aber nicht biologisch abbaubar, im Gegenteil, sie sind äusserst resistent gegenüber natürlichen Abbauverfahren.

In der W092/10246 wird das Verstärken von biologisch abbaubaren Polymeren vorgeschlagen, wobei u.a. vorgeschlagen wird, aus Kartoffelstärke hergestellte destrukturierte Stärke mit Sisalfasern zu verstärken. In der EP-A-0 551 954 sowie in einem Artikel der holländischen Zeitschrift "Chemisch Magazine", September 1992, Seiten 446 ff, wird das Verstärken von destrukturierter Stärke mit Naturfasern beschrieben, wie beispielsweise mittels Kartoffelfasern oder mittels Flachs.

Es ist eine Aufgabe der vorliegenden Erfindung, eine biologisch abbaubare Polymermischung vorzuschlagen, welche wesentlich verbesserte mechanische Eigenschaften aufweist.

Es ist eine weitere Aufgabe der vorliegenden Erfindung, ein biologisch abbaubares Polymer vorzuschlagen, das für den Einsatz als sog. "technischer Kunststoff" (engineering plastic) geeignet ist.

Erfindungsgemäss wird verstärktes, biologisch abbaubares nicht geschäumtes Polymer gemäss dem Wortlaut der Ansprüche 1 bis 11 und einVerfahren zu dessen Herstellung gemäß dem Wortlaut der Ansprüche 12 bis 15 vorgeschlagen.

Erfindungsgemäss wird vorgeschlagen, ein im wesentlichen biologisch abbaubares Polymer durch Naturfasern zu verstärken, welche entsprechend den allgemein in der Kunststofftechnik üblichen Verfahren in ein entsprechendes biologisch abbaubares Polymer eingebaut werden. Bei den Naturfasern kann es sich um eine der nachfolgenden handeln: Ramie, Baumwolle, Jute, Hanf, Sisal, Flachs, Leinen, Seide, Abaka und/oder Mischungen davon.

Insbesondere geeignet sind Sisal- und Ramiefasern. Bei Sisal handelt es sich um biegsame Blattfasern aus den bis 2 m langen Blättern der in Zentralamerika heimischen Sisalagave. Diese Hartfasern, gelegentlich auch bezeichnet als "Sisalhanf", werden z.B. zum Herstellen von Schiffstauen, Seilen, Bürsten, usw. verwendet. Ramiefasern, auch bekannt unter der Bezeichnung Chinagrasfasern, werden von der Ramiepflanze gewonnen, welche ursprünglich aus China, Japan und Südostasien stammt. Auch heute noch stammen ca. 85% der Weltramieproduktion von insgesamt rund 100'000t Rohfasern aus China. Die hochpolymere chemische Struktur und die spezielle Mikrostruktur verleihen der Ramiefaser dynamische Belastbarkeit und eine aussergewöhnlich hohe Reissfestigkeit im trockenen wie im nassen Zustand. Unter Zugbelastung weist die Ramiefaser eine sehr geringe Dehnung auf, vergleichbar etwa mit jener von Glas-, Metall-, Kohlenstoff- oder Aramidfasern.

Aufgrund der geschilderten Eigenschaften eignen sich deshalb insbesondere Sisalfasern und Ramiefasern ausgezeichnet als Verstärkung, weshalb in der Vergangenheit bereits vorgeschlagen worden ist, z.B. Ramiefasern in Kombination mit Metall-, Aramid- und Karbonfasern in Gips, Zement und Epoxydharzen zu kombinieren. Aufgrund des hohen Preises jedoch - Ramiefasern kosten doppelt so viel wie Baumwollfasern - haben sich Ramiefasern als Verstärkung nicht etablieren können.

Im Zusammenhang jedoch mit biologisch abbaubaren Polymeren bieten Naturfasern, wie insbesondere Sisal- und Ramiefasern eine ausgezeichnete Möglichkeit, die mechanischen Eigenschaften derartiger Polymere entscheidend zu verbessern, ohne jedoch die biologische Abbaubarkeit der genannten Polymere negativ zu beeinflussen. Mehr noch, Sisal- und Ramiefasern stellen eine natürlich nachwachsende Ressource dar, weshalb sie beispielsweise in Kombination mit Stärke, Cellulose oder anderen, auf natürlich nachwachsenden Ressourcen aufbauenden Polymeren verstärkte Polymere liefern, welche somit insgesamt vollständig auf natürlichen Ressourcen basieren. Selbstverständlich aber eignen sich Sisal- und Ramiefasern auch zum Verstärken von synthetischen biologisch abbaubaren Polymeren, wie beispielsweise Cellulosederivaten, wie Celluloseäther, Celluloseester oder -mischester, sowie aliphatische Polyester, wie Polycaprolacton, Polyhydroxy-Buttersäure, etc., sowie hydrophobe Proteine, wie Zein und Polyvinylalkohole, welche durch nicht hundertprozentige Hydrolisierung von Polyvinylacetat hergestellt werden können.

Schliesslich können selbstverständlich auch synthetische Polymere wie Polyamid, Polyester, Polypropylen etc. mit beispielsweise Sisal- und Ramiefasern verstärkt werden; da jedoch im Zusammenhang mit den genannten Kunststoffen die biologische Abbaubarkeit kein Thema ist, stehen somit diese Naturfasern in direkter Konkurrenz zu anderen Verstarkungsmitteln, wie beispielsweise Glasfasern, Kohlenstoffasern und dergleichen, wo schliesslich einzig der Preis der entscheidende Faktor ist.

Erfindungsgemass wird vorgeschlagen, 5-30% an Naturfasern in ein biologisch abbaubares Polymer einzuarbeiten. Selbstverständlich ist es möglich, auch noch höhere Anteile an Naturfasern in Polymere einzubauen, jedoch ergeben sich einerseits Probleme beim Einarbeiten der Fasern ins Polymer infolge sehr hoher Scherkräfte, und andererseits werden ab einem gewissen Zeitpunkt Erhöhung von Zugfestigkeit und Bruchdehnung nur noch auf Kosten beispielsweise erhöhter Sprödigkeit erhalten.

Vorgeschlagen wird ein verstärktes biologisch abbaubares Polymer, beinhaltend thermoplastische Stärke oder ein Polymerblend, beinhaltend thermoplastische Stärke und mindestens ein weiteres hydrophobes biologisch abbaubares Polymer. Selbstverständlich ist es auch möglich, beispielsweise destrukturierte Stärke mittels Ramiefasern zu verstärken, da jedoch grundsätzlich durch das Verstärken mittels beispielweise Sisal- oder Ramiefasern sog. hochwertige "engineering plastics" hergestellt werden, ist es natürlich von Vorteil, auch das zugrunde liegende Stärkepolymer zu optimieren. In diesem Zusammehang sei auf die internationale Patentanmeldung W 90/05161 sowie weitere Publikationen wie "Sorptionsverhalten von nativer und thermoplastischer Stärke, R.M. Sala, I.A. Tomka, Die angewandte makromolekulare Chemie, 199 (1992) 45-63; sowie Diss. ETH Nr. 9917 von R.M. Sala, Zürich 1992, ETH Zürich, verwiesen.

Dabei kann beispielsweise von einer thermoplastischen Stärke ausgegangen werden, welche mindestens eines der nachfolgenden Plastifiziermittel oder Quellmittel enthält:

Sorbitol, Glyzerin, Pentaeritritol, Trimetylolpropan, ein Polyvinylakohol, einen ethoxylierten Polyalkohol oder Mischungen dieser Komponenten. Selbstverständlich kann die thermoplastische Stärke auch mittels eines anderen Quell- oder Plastifizierungsmittels aufgeschlossen sein, das geeignet ist zu deren Herstellung. Wesentlich im Unterschied zu destrukturierter Stärke ist, dass die thermoplastische Stärke nicht mit Wasser aufgeschlossen worden ist.

Im Falle der Verwendung eines Polymerblends, umfassend thermoplastische Stärke, um mittels zum Beispiel Ramiefasern verstärkt zu werden, eignen sich insbesondere die oben angeführten hydrophoben biologisch abbaubaren Polymere, welche ihrerseits als alleinige Polymerkomponenten mittels Ramiefasern verstärkt werden können. Es handelt sich dabei um Cellulosederivate mit einem Substitutionsgrad ≤ 2, wie Celluloseäther, Celluloseester oder -mischester;
um aliphatische Polyester, wie Polycaprolacton, Polyhydroxy-Buttersäure, Polyhydroxy-Buttersäure/Hydroxy-Valeriansäure-Copolymere und Poly-Milchsäure; sowie
hydrophobe Proteine wie beispielsweise Zein; und/oder
Polyvinylalkohol, hergestellt durch nicht hundertprozentige Hydrolisierung von Polyvinylacetat, vorzugsweise mit einem Hydrolisierungsgrad von ca. 88%.

Als Beispiel für einen Celluloseäther sei Cellulosediethyläther (CDE) genannt, der beispielsweise mit Diethyltartrat als Weichmacher bei 190°C thermoplastisch verarbeitbar ist, und welcher Celluloseäther biologisch abbaubar ist. Die maximale Wasseraufnahme bei 20°C beträgt nur gerade 0,04 Gew.-Anteile.

Als Beispiel für Celluloseester sei Cellulosediacetat (CDA) oder als Mischester Celluloseacetatbutyrat genannt, die mit Weichmachern bei 180°C thermoplastisch verarbeitbar sind und die biologisch abbaubar sind. Die maximale Wasseraufnahme bei 20°C in Wasser beträgt nur gerade 0,05 Gew.-Anteile.

Polycaprolacton kann ohne Weichmacher bei 120°C verarbeitet werden, ist teilkristallin mit einem Schmelzpunkt zwischen 60° und 80°C und einer glasigen Erstarrung bei -50°C. Die mechanischen Eigenschaften sind vergleichbar mit denjenigen von Low Density Polyethylen. Die maximale Wasseraufnahme bei 20°C ist < 0,01 Gew.-Anteile, und zudem ist Polycaprolacton biologisch abbaubar. Ein grosser Vorteil der Verwendung von Polycaprolacton liegt darin, dass es mit thermoplastischer Stärke problemlos mischbar ist, ohne die Notwendigkeit der Verwendung eines sog. Phasenvermittlers.

Polyhydroxy-Buttersäure/Polyhydroxy-Valeriansäure-Copolymere sind thermoplastisch verarbeitbar, weisen gute mechanische Eigenschaften auf sowie niedrige Wasseraufnahme von < 0,01 Gew.-Anteile und sind zudem biologisch abbaubar. Dasselbe trifft für Polymilchsäure zu, die, obwohl thermoplastisch gut verarbeitbar, gute mechanische Eigenschaften aufweist sowie biologisch abbaubar ist.

Als hydrophobes Protein wird beispielsweise Zein vorgeschlagen, das mit 0,2 Gew.-Anteilen von Laurinsäure oder Diethyltartrat bei 130°C thermoplastisch verarbeitbar ist.

Schliesslich sei noch Polyvinylalkohol genannt, bekannt beispielsweise unter dem Markennamen Moviol, wobei vorteilhafterweise das zur Herstellung verwendete Polyvinylacetat 88%ig hydrolisiert wird.

Vorzugsweise wird in einer derartigen Polymermischung ein Phasenvermittler verwendet, der sowohl verträglich ist gegenüber der thermoplastisch verarbeitbaren Stärke und gleichzeitig gegenüber dem hydrophoben Polymer. Aufgrund der unterschiedlichen Kohäsionsenergiedichten von Stärke und den hydrophoben Polymeren kommen in der Regel Blockcopolymere in Frage, und zwar solche, die aus einem in Stärke löslichen Block und aus einem in der hydrophoben Polymerphase löslichen Block bestehen. Wesentlich ist dabei natürlich, dass der Phasenvermittler ebenfalls biologisch abbaubar ist und thermoplastisch einwandfrei verarbeitet werden kann. Als Beispiel hierzu sei ein Polycaprolacton/Polyvinylalkoholcopolymer genannt.

Als Phasenvermittler kommen aber auch Reaktionsprodukte zwischen einem hydrophoben biologisch abbaubaren Polemeren mit der thermoplastischen Stärke in Frage, die verträglich sind mit der hydrophoben Polymerphase. Dabei kann beispielsweise das biologisch abbaubare Polymere reaktive Gruppen wie beispielsweise Epoxydgruppen oder auch Säureanhydridgruppen umfassen, welche mit mindestens einem Teil der themoplastischen Stärke reagieren.

Der zu verwendende Phasenvermittler bzw. die einzusetzende Menge ist schliesslich eine Frage der Optimierung; wesentlich bei der für die Schaumherstellung zu verwendenden Polymermischung ist, dass sie möglichst homogen bzw. gleichmässig ist, um auch einen möglichst gleichmässigen Schaum herstellen zu können.

Vor dem Einarbeiten der Naturfasern, wie zum Beispiel Ramiefasern, in das biologisch abbaubare Polymer werden diese vorteilhafterweise degummiert durch Entfernen von Pektinen und Hemicellulose durch an sich bekannte Kombinationen von biochemischen und chemischen Methoden, die Herstellern von Ramiefasern bestens bekannt sind. Früher wurden natürliche Fasern in der Regel in Alkalilösungen gekocht.

Für das Einarbeiten werden Naturfasern, wie zum Beispiel Ramiefasern, mit einer Faserlänge von 0,08 - 5 mm verwendet. Die Einarbeitung erfolgt in üblich in der Kunststofftechnik verwendeten Polymermischanlagen, wie Ein-, Zweiwellenextrudern oder Knetern, wobei das Einarbeiten selbstverständlich auch diskontinuierlich in entsprechenden Mischern erfolgen kann. Wesentlich beim Einarbeiten von Ramiefasern in das biologisch abbaubare Polymer ist, dass die eingebrachte mechanische Energie wie auch die Temperatur derart gewählt werden, dass keine Degradation des biologisch abbaubaren Polymeren einsetzt. Insbesondere bei Verwendung von thermoplastischer Stärke ist es wichtig, dass in einem Extruder Temperaturen deutlich unter 200° C eingehalten werden, ansonsten die Stärke stark abgebaut wird. Die Weiterverarbeitung der verstärkten Kunststoffe ist weniger kritisch und kann beispielsweise im Falle von thermoplastischer Stärke in einem Temperaturbereich von 180° - 210°C erfolgen.

Bei der Herstellung der verstärkten Polymere können weitere Additive und Zuschlagstoffe verwendet werden, wie sie in der Kunststoff verarbeitenden Industrie allgemein üblich sind, wie Gleitmittel, Weichmacher Plastifizierungsmittel Füllstoffe, Entformingshilfen, flammhemmende Zusätze, Farbstoffe und/oder Entschäumungsmittel.

Um die mechanischen Eigenschaften von mit erfindungsgemass hergestellten verstärkten biologisch abbaubaren Polymeren hergestellten Formkörpern zu beeinflussen, ist es auch möglich, nebst den beispielsweise erfindungsgemass vorgeschlagenen Sisal- oder Ramiefasern weitere biologisch abbaubare bzw. natürliche Fasern zu verwenden, wie beispielsweise Baumwolle. Durch das Abmischen beispielsweise der Ramiefasern mit Baumwolle ist es möglich, mit den erfindungsgemäss vorgeschlagenen Polymeren hergestellte Formkörper zu flexibilisieren-Schliesslich ist es eine Frage der Optimierung, welche natürlichen Fasern, wie beispielsweise Baumwolle, Hanf, Jute, Sisal etc., mit den Sisal- oder Ramiefasern abgemischt werden.

Ein weiterer Vorteil des Einarbeitens von beispielsweise Ramiefasern in biologisch abbaubare Poymere liegt darin, dass die Wasserresistenz des Polymeren erhöht wird. Insbesondere bei Verwendung von in der Regel hydrophilen natürlichen Polymeren wie Stärke oder Cellulose kann dies ein wichtiger Vorteil sein.

Die Erfindung wird nun anschliessend anhand von Beispielen und von Versuchsreihen näher erläutert.

Beispiel 1: Ausgegangen wird von thermoplastischer Stärke, welche durch Aufschliessen von 65% Stärke mit 35% Sorbitol hergestellt worden ist. Gearbeitet wird in einem Compoundiergerät der Marke Theysohn TSK 045 (gleichlaufender Zweiwellenextruder) mit verschiedenen Flüssig/-Feststoffdosierungen. Im Extruder wird das nachfolgende Temperaturprofil gewählt:

| Zone 1 | Zone 2 | Zone 3 | Zone 4 | Zone 5 | Zone 6 | Zone 7 | Zone 8 |
|---|---|---|---|---|---|---|---|
| 25°C | 130°C | 150°C | 170°C | 150°C | 140°C | 140°C | 170°C |

In Zone 1 werden 10kg/h thermoplastische Stärkegranulate dosiert und aufgeschmolzen. In Zone 5 werden zusätzlich 1500g/h thermoplastischer Stärke, 840g/h Ramiefasern mit einer Faserlänge von 0,5mm und 200g/h Stearinsäure zugegeben. Die Ramiefaser wurde vor Einmischen durch Auffeuchten vorbehandelt bzw. mit Wasser weitgehendst gesättigt. Anschliessend erfolgt Mischen und der Schmelzaustrag sowie Heissabschlag. Es ist dabei zu achten, dass das Material beim Compoundieren nicht bereits aufschäumt, was durch Temperaturen deutlich unter 200°C erreicht werden kann. Die folgenden Extruderwerte wurden gewählt:

| | |
|---|---|
| Drehzahl Extruder | 200 min⁻¹ |
| Drehmoment | 65% des Maximaldrehmoments |
| Massedruck (Düse) | 4-8 bar |

Alternativ zur in Beispiel 1 verwendeten Prozessführung kann auch von nativer Stärke ausgegangen werden, wobei zunächst durch Zusetzen von Sorbitol die thermoplastische Stärke aufgeschlossen wird. Dabei ist zu beachten, dass allfällig in der nativen Stärke vorhandene Feuchtigkeit durch Anlegen von Vakuum entgast wird. Wesentlich ist ja, dass die thermoplastische Stärke beim Verarbeiten bzw. beim Einarbeiten und Compoundieren mit der Ramiefaser nur geringe Feuchtigkeit aufweist, d.h. vorzugsweise beträgt die Feuchtigkeit < 1 Gew.%.

Beispiel 2: Verwendet wird dasselbe Compoundieraggregat wie in Beispiel 1. Wiederum werden 10kg/h thermoplastischer Stärke (beinhaltend 35 Gew.% Sorbitol) in Zone 1 zudosiert und aufgeschmolzen. In Zone 5 werden zusätzlich 1500g/h thermoplastischer Stärke sowie 1200g/h Ramiefasern mit einer Fasernlänge von 0,5 mm sowie 200g/h Stearinsäure zudosiert.

| Extruderwerte: | |
|---|---|
| Drehzahl Extruder | 200 min⁻¹ |
| Drehmoment | 80% des Maximaldrehmoments |
| Massedruck (Düse) | 4 bar |

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 25°C | 130°C | 150°C | 170°C | 130°C | 120°C | 120°C | 160°C |

Beispiel 3: Als Basis in Beispiel 3 dient native Stärke, welche in Zone 1 eines analogen Compoundieraggregates zugemischt wird, wie in den Beispielen 1 und 2 verwendet. In Zone 1 werden 13,5kg/h Stärke zudosiert und in Zone 2 10kg/h Sorbitol. Dann erfolgt der Stärkeaufschluss zu thermoplastischer Stärke. Entstehender Wasserdampf wird in Zone 4 über ein Vakuum abgesaugt. In Zone 5 werden 200g/h fertige thermoplastische Stärke sowie 1200g/h Ramiefasern mit einer Faserlänge von 1 mm sowie 200g/h Stearinsäure zudosiert. Die so hergestellte Schmelze wird ausgetragen und granuliert.

| Extruderwerte: | |
|---|---|
| Drehzahl Extruder | 200 min⁻¹ |
| Drehmoment | 65% des Maximaldrehmoments |
| Massedruck (Düse) | 40 bar |

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 80°C | 160°C | 190°C | 180°C | 160°C | 140°C | 140°C | 170°C |

Wie das Temperaturprofil deutlich zeigt, werden in den Zonen 2 bis 4 Temperaturen zwischen 160°C und 190°C eingestellt, welche Temperaturen notwendig bzw. bevorzugt sind, um thermoplastische Stärke aufzuschliessen. Anschliessend werden die Temperaturen auf 160°C bzw. darunter abgesenkt, um ein Austreten der Feuchtigkeit aus den Ramiefaserkapillaren zu verhindern.

Anstelle von Sorbitol kann selbstverständlich auch Pentaeritritol oder Glyzerin verwendet werden oder ein anderer geeigneter Weichmacher zum Aufschliessen der thermoplastischen Stärke. Je nach der sich einstellenden Viskosität der Stärke/Weichmachermischung bzw. der so aufgeschlossenen thermoplastischen Stärke können in den Zonen 4 und folgende für das Einarbeiten der Ramiefasern tiefere Temperaturen gewählt werden.

Beispiel 4: Alle Einstellungen wie in Beispiel 3, nur in Zone 5 werden anstelle von 200g/h Stearinsäure neu 400g/h zudosiert.

| | |
|---|---|
| Extruderwerte | 200 min⁻¹ |
| Drehzahl Extruder | 60-65% des Maximaldrehmoments, |
| Massedruck (Düse) | 30-40 bar |

Beispiel 5: In Zone 1 werden 13,5kg/h Stärke zudosiert und in Zone 2 10kg/h Sorbitol. Daran anschliessend erfolgt Aufschluss der Stärke. In Zone 4 wird unerwünschtes Wasser entzogen. In Zone 5 werden 200g/h fertig aufgeschlossene thermoplastische Stärke, 240g/h Ramiefasern mit Faserlänge 2 mm und 360g/h von einem neutralen Fettsäureester als Verarbeitungshilfe zudosiert. Die Schmelze wird abgezogen und granuliert.

| Extruderwerte: | |
|---|---|
| Drehzahl Extruder | 250 min⁻¹ |
| Drehmoment | 55% des Maximaldrehmoments |
| Massedruck (Düse) | - |

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 80°C | 160°C | 190°C | 180°C | 170°C | 160°C | 160°C | 170°C |

Beispiel 6: Gleiche Prozessführung wie in Beispiel 5, nur werden in Zone 5 statt 360g/h neu 470g/h Verarbeitungshilfe zudosiert.

| Extruderwerte: | |
|---|---|
| Drehzahl Extruder | 250 min⁻¹ |
| Drehmoment | geringerer Wert wie Beispiel 5 |
| Massedruck (Düse) | - |

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 80°C | 160°C | 190°C | 180°C | 150°C | 135°C | 135°C | 135°C |

Beispiel 7: In Zone 1 werden 10kg/h fertig aufgeschlossene thermoplastische Stärke eingegeben, sowie in Zone 2 160g/h Wasser als Prozesshilfe. In Zone 4 wird das Wasser wieder entfernt. In Zone 5 erfolgt Zugabe von 2000g/h fertig ausgeschlossener thermoplastischer Stärke, sowie 2400g/h Ramiefasern mit Faserlänge von 2 mm und 360g/h eines neutralen Fettsäureesters als Verarbeitungshilfe. Anschliessend Abzug der Schmelze und Granulieren.

| Extruderwerte: | |
|---|---|
| Drehzahl Extruder | 200 min⁻¹ |
| Drehmoment | 65% des Maximalwertes |
| Massedruck (Düse) | - |

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 40°C | 130°C | 155°C | 170°C | 150°C | 140°C | 140°C | 170°C |

Beispiel 8: In Zone 1 werden 10kg/h fertig aufgeschlossene thermoplastische Stärke zudosiert sowie in Zone 2 160g/h Wasser als Prozesshilfe. In Zone 4 erfolgt Entfernung des Wassers. In Zone 5 Zugabe von 2000g/h fertig aufgeschlossene thermoplastische Stärke sowie 1200g/h Ramiefasern mit einer Faserlänge von 1 mm und 360g/h eines neutralen Fettsäureesters als Verarbeitungshilfe. Anschliessend Abziehen der Schmelze und Granulieren.

| Extruderwerte: | |
|---|---|
| Drehzahl Extruder | 200 min⁻¹ |
| Drehmoment | 50-55% des Maximalwertes |
| Massedruck (Düse) | - |

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 25°C | 130°C | 155°C | 170°C | 150°C | 140°C | 140°C | 170°C |

Beispiel 9: Basis: fertig aufgeschlossene thermoplastische Stärke mit 33% Glyzerin; Faserlänge 0,5 mm, Wassergehalt der Faser 7%.

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 100°C | 180°C | 180°C | 150°C | 120°C | 120°C | 120°C | 170°C |

In Zone 1 werden 15kg/h thermoplastisches Stärke-Granulat dosiert und aufgeschmolzen. In Zone 4 werden zusätzlich 340g/h Ramiefasern, in Zone 5 1500g/h thermoplastische Stärke und 200g/h Stearinsäure zugegeben. Dann erfolgt Schmelzeaustrag und Heissabschlag. Es ist darauf zu achten, dass das Material nicht schon beim Compoundieren aufschäumt (Temp. 200°C).

| Extruderwerte: | |
|---|---|
| Drehzahl Extruder | 150 min⁻¹ |
| Drehmoment | 45% des Maximaldrehmomentes |
| Massedruck (Düse) | 4 bar |

Beispiel 10: Fertig aufgeschlossene thermoplastische Stärke mit 33% Glyzerin; Faserlänge 0,5 mm, Wassergehalt der Fasern 7%.

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 100°C | 180°C | 180°C | 150°C | 120°C | 120°C | 120°C | 170°C |

In Zone 1 werden 20kg/h thermoplastisches Stärke-Granulat dosiert und aufgeschmolzen. In Zone 4 werden zusätzlich 670g/h Ramiefasern, in Zone 5 2500g/h thermoplastische Stärke und 200g/h Stearinsäure zugegeben. Dann erfolgt der Schmelzeaustrag und Heissabschlag. Temperaturen nicht über 200°C.

| Extruderwerte: | |
|---|---|
| Drehzahl Extruder | 100 min⁻¹ |
| Drehmoment | 55% des Maximaldrehmoments |
| Massedruck (Düse) | 10 bar |

Beispiel 11: Fertig aufgeschlossene thermoplastische Stärke mit 33% Glyzerin; Faserlänge 0,5 mm, Wassergehalt der Fasern 7%.

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 60°C | 180°C | 180°C | 150°C | 120°C | 120°C | 120°C | 170°C |

In Zone 1 werden 20kg/h thermoplastische Stärke dosiert. In Zone 4 werden 1260g/h Ramiefasern, in Zone 5 3000g/h thermoplastische Stärke und 200g/h Stearinsäure zudosiert. Granulieren.

| Extruderwerte: | |
|---|---|
| Drehzahl Extruder | 200 min⁻¹ |
| Drehmoment | 50% des Maximaldrehmoments |
| Massedruck (Düse) | 12 bar |

Beispiel 12: Polymerblend, bestehend aus 50% thermoplastischer Stärke (aufgeschlossen mit 35% Sorbitol und Glyzerin im Verhältnis 1:1) und 50% Polycaprolacton; Faserlänge 0,5 mm, Wassergehalt der Fasern 7%.

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 60°C | 180°C | 180°C | 120°C | 120°C | 120°C | 120°C | 150°C |

In Zone 1 werden 20kg/h der Polymermischung zudosiert. In Zone 4 werden 1260g/h Ramiefasern zugegeben.

| Extruderwerte: | |
|---|---|
| Drehzahl Extruder | 200 min⁻¹ |
| Drehmoment | 50% des Maximaldrehmoments |
| Massedruck (Düse) | 4,0 bar |

Beispiel 13: Polymermischung gemäss Beispiel 12.

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 60°C | 180°C | 180°C | 120°C | 120°C | 120°C | 120°C | 150°C |

In Zone 1 werden 20kg/h Polymermischung-Granulat dosiert. In Zone 4 werden 2100g/h Ramiefasern zugegeben. Granulieren.

| Extruderwerte: | |
|---|---|
| Drehzahl Extruder | 200 min⁻¹ |
| Drehmoment | 50% des Maximaldrehmoments |
| Massedruck (Düse) | 4,0 bar |

Beispiel 14: Im Gegensatz zu den vorab hergestellten Polymermischungen, wo Kartoffelstärke als Stärkebasis diente, wird im vorliegenden Beispiel 14 fertig aufgeschlossene Mais-thermoplastische Stärke mit 35% Sorbitol verwendet. Faserlänge 0,5 mm, Wassergehalt der Fasern 7%.

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 60°C | 160°C | 180°C | 160°C | 160°C | 160°C | 160°C | 170°C |
| | | | | | | | |

Dosieren von 15kg/h thermoplastischer Stärke in Zone 1. In Zone 4 werden zusätzlich 900g/h Ramiefasern, in Zone 5 1500g/h fertige thermoplastische Stärke und 400g/h Stearinsäure zugegeben.

| Extruderwerte: | |
|---|---|
| Drehzahl Extruder | 200 min⁻¹ |
| Drehmoment | 45% des Maximaldrehmoments |
| Massedruck (Düse) | 6,0 bar |

Beispiel 15: Thermoplastische Stärke analog Beispiel 14; Faserlänge 0,1 mm, Wassergehalt der Fasern 7%.

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 60°C | 160°C | 180°C | 160°C | 160°C | 160°C | 160°C | 170°C |
| | | | | | | | |

In Zone 1 Dosieren von 15kg/h thermoplastischer Stärke. In Zone 4 zusätzlich 1800g/h Ramiefasern und in Zone 5 1500g/h thermoplastische Stärke und 400g/h Stearinsäure.

| Extruderwerte: | |
|---|---|
| Drehzahl Extruder | 200 min⁻¹ |
| Drehmoment | 45% des Maximalwertes |
| Massedruck (Düse) | 10 bar |

Beispiel 16: Thermoplastische Stärke analog Beispiele 14 und 15; Faserlänge 1,0 mm, Wassergehalt der Fasern 18%.

| Temperaturprofil Extruder: | | | | | | | |
|---|---|---|---|---|---|---|---|
| Zone 1 | Zone 2 | Zone 3 | Zone 4 | Zone 5 | Zone 6 | Zone 7 | Zone 8 |
| 60°C | 160°C | 180°C | 160°C | 160°C | 160°C | 160°C | 170°C |

In Zone 1 Dosieren von 15kg/h thermoplastischer Stärke. In Zone 4 Zugabe von 1800g/h Ramiefasern, in Zone 5 Zugabe von 3000g/h thermoplastischer Stärke und 400g/h Stearinsäure. Granulieren.

| Extruderwerte: | |
|---|---|
| Drehzahl Extruder | 200 min⁻¹ |
| Drehmoment | 50% des Maximalwertes |
| Massedruck (Düse) | 6,0 bar |

Beispiel 17: Reines Polycaprolacton; Faserlänge 1,0 mm, Wassergehalt der Fasern 18%.

| Temperaturprofil Compounder: | | | | | | | |
|---|---|---|---|---|---|---|---|
| Zone 1 | Zone 2 | Zone 3 | Zone 4 | Zone 5 | Zone 6 | Zone 7 | Zone 8 |
| 30°C | 150°C | 150°C | 80°C | 80°C | 80°C | 80°C | 80°C |

In Zone 1 Dosieren von 15kg/h Polycaprolacton. In Zone 2 Zugeben von 1800g/h Ramiefasern, in Zone 5 Zugeben von 5kg/h Polycaprolacton.

| Extruderwerte: | |
|---|---|
| Drehzahl Extruder | 125 min⁻¹ |
| Drehmoment | 45% vom Maximaldrehmoment |
| Massedruck (Düse) | 5,0 bar |

Beispiel 18: Die Herstellung erfolgte nun im Gegensatz zu den oben angeführten Beispielen auf einem Buss Ko-Kneter (46 mm Schneckendurchmesser). Als Basis diente Stärke und Weichmacher (35% Sorbitol); Faserlänge 0,5 mm, Wassergehalt der Fasern 7%.

| Temperaturprofil im Busskneter: | | | | |
|---|---|---|---|---|
| Zone 0 | Zone 1 | Zone 2 | Zone 3 | Zone 4 |
| 90°C | 90°C | 130°C | 150°C | 150°C |

Der Busskneter hat 4 Heizzonen (Zonen 1-4), Zone 0 entspricht hier der beheizbaren Schnecke.

Die Stärke wurde hier mit 2,5% Ramiefasern vorgemischt (bezogen auf das Endprodukt TPS = Stärke + Sorbitol). 13,5kg/h Stärke/Fasergemisch und 7kg/h Sorbitol wurden zusammen in Zone 1 zudosiert. Danach erfolgte die Plastifizierung und eine anschliessende Kaltgranulierung.

| Kneterwerte: | |
|---|---|
| Kneterdrehzahl | 200 min⁻¹ |

die spezifische Leistungsaufnahme beträgt 300 Wh/kg

### Beispiel 19:

Die Herstellung erfolgte auf einem Zweiwellenschneckenkneter ZSK 40 der FA. Werner & Pfleiderer, Stuttgart.

Als Basis diente eine thermoplastische Stärke mit Anteilen von Polycaprolacton. Als Fasermaterial wurden Sisalfasern mit einer durchschnittlichen Länge von 0,08 mm eingesetzt. Beide Komponenten wurden in Zone 1 eindosiert, und zwar 8 kg/h thermoplastischer Stärke und 800g/h Sisalfasern. Anschliessend erfolgte eine Strang-Granulierung.

| Temperaturprofil im Kneter: | | | | | | |
|---|---|---|---|---|---|---|
| Zone 1 | Zone 2 | Zone 3 | Zone 4 | Zone 5 | Zone 6 | Zone 7 |
| 30°C | 160°C | 160°C | 140°C | 130°C | 130°C | 130°C |

| | |
|---|---|
| Drehzahl | 100 Upm |
| Drehmoment | 35 % vom Maximaldrehmoment |
| Massedruck | 10 bar |

### Versuchsreihe 1:

In dieser Versuchsreihe wurden Ramiefasern von 4 mm Länge in verschiedenen Prozentsätzen auf einem Brabender Laborkneter in thermoplastische Stärke eingemischt, welche 35 % Sorbitol enthielt.

**Tabelle 1:**

| Faseranteil (in Gew.%) | Ausgangsmaterial | 9 | 17 | 23 | 29 |
|---|---|---|---|---|---|
| rel. Zugfestigkeit (in Bezug auf Ausgangsmaterial) | 1 | 1,8 | 2,8 | 3,2 | 3,7 |
| | | | | | |
| rel. Bruchdehnung (in Bezug auf Ausgangsmaterial) | 1 | 1,3 | 1,5 | 1,7 | 2 |

### Versuchsreihe 2:

Erneut wurden Ramiefasern auf einem Zweiwellen-Extruder in die thermoplastische Stärke eingemischt, beinhaltend 35% Sorbitol. Es wurden Fasern mit einer Länge von 0,5 mm in den Prozentsätzen 7,5% und 13% zugemischt.

**Tabelle 2:**

| | Ausgangsmaterial (reine TPS) | 7,5 Gew.% Fasern | 13 Gew.% Fasern |
|---|---|---|---|
| Zugfestigkeit (N/mm2) | 20 | 29 | 42 |
| | | | |
| Bruchdehnung (%) | 1.6 | 2.3 | 3.5 |
| | | | |
| E-Modul (N/mm2) | 1000 | 1000 | 800 |

Die Abnahme des E-Moduls bei 13% Fasern und das Gleichbleiben des E-Moduls bei 7,5% Faseranteil ist wiederum auf eine leichte Degradation der thermoplastischen Stärke zurückzuführen. Allerdings hat sich geziegt, dass bereits durch das Verwenden eines Zweiwellen-Extruders und verbesserter Prozessführung die Degradation gegenüber der Versuchsreihe 1 stark vermindert werden konnte. Durch geeignete Maschinenauslegung und Optimierung der Prozessführung kann diese weitgehendst verhindert werden.

Ein Vergleich der Werte in Tabelle 1 und Tabelle 2, soweit dies möglich ist, zeigt, dass der Anstieg der relativen Zugfestigkeit in Tabelle 1 bei steigendem Anteil an Ramiefasern grösser ist als in Tabelle 2. Dieser Effekt ist insbesondere auf die Verwendung einer längeren Faser in Versuchsreihe 1 zurückzuführen.

Bei den in den Beispielen 1 - 19 und Versuchsreihe 1 und 2 verwendeten Rezepturn bzw. Versuchsbedingungen handelt es sich nur um Beispiele, welche einzig dazu dienen, die Erfindung näher zu erläutern, resp. beispielsweise Herstellbedingungen dazulegen. Selbstverständlich ist es möglich, auch andere Polymere bzw. Polymermischungen mit Naturfasern, wie beispielsweise Sisal- oder Ramiefasern zu verstärken. Selbstverständlich ist es auch möglich anstelle von Sisal- oder Ramiefasern andere Naturfasern zu verwenden, wie beispielsweise Baumwolle, Jute, Hanf, Flachs, Leinen, Seide, Abaka und/oder Mischungen davon. Erfindungswesentlich ist der Grundgedanke, dass ein an sich biologisch abbaubares Polymer bzw. eine Polymermischung nicht aufgrund des Verstärkens durch Zumischen eines Verstärkungsmittels die biologische Abbaubarkeit wenigstens teilweise verliert. Durch das Zumischen einer Naturfaser, wie beispielsweise Sisal- oder Ramiefaser, wird einerseits eine respektable Verstärkung des Polymeren bzw. der Mischung erzielt, ohne Einbusse der biologischen Abbaubarkeit.

## Patentansprüche

1. Verstärktes biologisch abbaubares Polymer, gekennzeichnet durch nicht geschäumte thermoplastische Stärke oder eine nicht geschäumte Polymermischung, beinhaltend thermoplastische Stärke und mindestens ein hydrophobes, biologisch abbaubares Polymer, verstärkt mittels Naturfasern, welche im Polymeren eingebaut sind, wobei die thermoplastische Stärke Quell- oder Plastifizierungsmittel, ausgenommen Wasser, enthält und wobei das Polymer erhältlich ist durch Verarbeiten bzw. Einarbeiten und Kompoundieren der Naturfaser in der Schmelze und bei einer Feuchtigkeit von < 1 Gew.% in der thermoplastischen Stärke.

2. Verstärktes Polymer nach Anspruch 1, dadurch gekennzeichnet, dass das Polymer mittels einer Naturfaser verstärkt ist, wobei es sich bei der Faser um eine der nachfolgenden handelt: Ramie, Baumwolle, Jute, Hanf, Sisal, Flachs, Leinen, Seide, Abaka und/oder Mischungen davon.

3. Verstärktes Polymer nach einem der Ansprüche 1 oder 2, dadurch gekennzeichnet, dass Ramiefasern in das biologisch abbaubare Polymer eingebaut sind.

4. Verstärktes Polymer nach einem der Ansprüche 1 bis 3, gekennzeichnet durch einen Anteil von 5 bis 30Gew% an Fasern.

5. Verstärktes Polymer nach einem der Ansprüche 1 bis 4, dadurch gekennzeichnet, dass das biologisch abbaubare Polymer eine Polymermischung ist, beinhaltend thermoplastische Stärke und mindestens eines der nachfolgenden Polymere:
- Cellulosederivat mit einem Substitutionsgrad 2;
- aliphatischer Polyester;
- hydrophobes Protein und/oder
- Polyvinylalkohol, hergestellt durch nicht hundertprozentige Hydrolisierung von Polyvinylacetat.

6. Verstärktes Polymer nach Anspruch 5, dadurch gekennzeichnet, dass das Cellulosederivat Celluloseäther, Celluloseester oder ein Mischester davon ist.

7. Verstärktes Polymer nach Anspruch 5, dadurch gekennzeichnet, dass der aliphatische Polyester Polycaprolacton, Polyhydroxy-Buttersäure, ein Polyhydroxy-Buttersäure/Hydroxy- Valeriansäure-Copolymer oder Poly-Milchsäure ist.

8. Verstärktes Polymer nach Anspruch 5, dadurch gekennzeichnet, dass das hydrophobe Protein Zein ist.

9. Verstärktes Polymer nach Anspruch 5, dadurch gekennzeichnet, dass der Polyvinylalkohol erhalten wird durch nicht 100%ige Hydrolisierung von Polyvinylacetat mit einem Hydrolisierungsgrad von ca. 88%.

10. Verstärktes Polymer nach einem der Ansprüche 5 bis 9, dadurch gekennzeichnet, dass die Polymermischung weiter einen Phasenvermittler enthält, wobei der Phasenvermittler für die molekulare Kopplung der Stärkephase mit der hydrophoben Polymerphase verantwortlich ist.

11. Verstärktes Polymer nach einem der Ansprüche 1 bis 10, dadurch gekennzeichnet, dass eine Polymermischung, bestehend aus thermoplastischer Stärke und Polycaprolacton, vorliegt, welche mit Ramie- und/oder Sisalfasern verstärkt ist.

12. Verfahren zur Herstellung eines verstärkten, biologisch abbaubaren nicht geschäumten Polymeren, dadurch gekennzeichnet, dass thermoplastische Stärke oder eine Polymermischung, beinhaltend thermoplastische Stärke und ein hydrophobes, biologisch abbaubares Polymer in einem Temperaturbereich von 100°C bis 200°C mit 5 bis 30Gew% an Naturfasern gemischt wird, wobei die thermoplastische Stärke Quell- oder Plastifiziermittel, ausgenommen Wasser, enthält sowie eine Feuchtigkeit aufweist beim Verarbeiten bzw. beim Einarbeiten und Kompoundieren mit der Naturfaser von < 1 Gew% und wobei es sich bei den Naturfasern um eine der nachfolgenden handelt: Ramie, Baumwolle, Jute, Hanf, Sisal, Flachs, Leinen, Seide, Abaka und/oder Mischungen davon.

13. Verfahren nach Anspruch 12, dadurch gekennzeichnet, dass thermoplastische Stärke, beinhaltend 20 bis 35Gew%, bezogen auf das Gewicht der Mischung an Glycerin oder Sorbitol oder einer Mischung davon, als Weichmacher bzw. Plastifiziermittel mit 5 bis 30Gew%, bezogen auf das Gesamtgewicht des verstärk-ten Polymeres, an Ramie- oder Sisalfasern mit einer Faserlänge von 0,08 bis 4mm in einem Temperaturbereich von 130°C bis 180°C gemischt wird.

14. Verfahren nach einem der Ansprüche 12 oder 13, dadurch gekennzeichnet, dass bei der Herstellung des verstärkten Polymeres in der Kunststoff-verarbeitenden Industrie gebräuchliche Additive verwendet werden.

15. Verfahren nach Anspruch 14, dadurch gekennzeichnet, dass es sich bei den Additiven um die nachfolgenden handelt: Gleitmittel, Weichmacher, Plastifizierungsmittel, Füllstoffe, Entformungsmittel, flammhemmende Zusätze und/oder Entschäumungsmittel.

## Claims

1. Reinforced biologically degradable polymer, characterised by non-foamed thermoplastic starch or a non-foamed polymer mixture containing thermoplastic starch and at least one hydrophobic biologically degradable polymer, reinforced by means of natural fibres which are incorporated in the polymer, wherein the thermoplastic starch contains a swelling or plasticising agent, excepting water, and wherein the polymer is obtainable by processing or incorporating and compounding the natural fibre in the melt and at a moisture content of at most 1% by weight in the thermoplastic starch.

2. Reinforced polymer according to claim 1, characterised in that the polymer is reinforced by means of a natural fibre which is one of the following: ramie, cotton, jute, hemp, sisal, flax, linen, silk, abaca and/or mixtures thereof.

3. Reinforced polymer according to one of claims 1 or 2, characterised in that ramie fibres are incorporated in the blologically degradable polymer.

4. Reinforced polymer according to one of claims 1 to 3, characterised by a component of 5 to 30% by weight of fibres.

5. Reinforced polymer according to one of claims 1 to 4, characterised in that the biologically degradable polymer is a polymer mixture containing thermoplastic starch and at least one of the following polymers:
- cellulose derivative having a degree of substitution of 2;
- aliphatic polyester;
- hydrophobic protein; and/or
- polyvinyl alcohol produced by a non one hundred percent hydrolysation of polyvinylacetate.

6. Reinforced polymer according to claim 5, characterised in that the cellulose derivative is cellulose ether, cellulose ester or a mixture thereof.

7. Reinforced polymer according to claim 5, characterised in that the diphatic polyester is polyester polycaprolactam, polyhydroxy-butyric acid, a polyhydroxy-butyric acid/hydroxy-valeric acid copolymer or polylactic acid.

8. Reinforced polymer according to claim 5, characterised In that the hydrophobic protein is zein.

9. Reinforced polymer according to claim 1, characterised in that the polyvinyl alcohol is obtained by a non-100% hydrolysatlon of polyvinylacetate at a degree of hydrolysation of about 88%.

10. Reinforced polymer according to one of claims 5 to 9, characterised in that the polymer mixture further contains a phase mediator, wherein the phase mediator is responsible for the molecular coupling of the starch phase with the hydrophobic polymer phase.

11. Reinforced polymer according to one of claims 1 to 10, characterised in that a polymer mixture consisting of thermoplastic starch and polycaprolactam is present, which is reinforced by ramle and/or sisal fibres.

12. Method of producing a reinforced, biologically degradable non-foamed polymer, characterised in that thermoplastic starch or a polymer mixture containing thermoplastic starch and a hydrophobic blologically degradable polymer is mixed in a temperature range of 100° C to 200° C with 5 to 30% by weight of natural fibres, wherein the thermoplastic starch contains a swelling or plasticising agent, excepting water, and has a moisture content during processing or incorporating and compounding with the natural fibre of at most 1% by weight and wherein the natural fibre is one of the following: ramie, cotton, jute, hemp, sisal, flax, linen, silk, abaca and/or mixtures thereof.

13. Method according to claim 12, characterised In that thermoplastic starch, containing 20 to 35% by weight based on the weight of the mixture of glycerol or sorbitol or a mixture thereof as plasticiser or plasticising agent is mixed with 5 to 30% by weight based on the total weight of the reinforced polymer, of ramie or sisal fibres having a fibre length of 0.08 to 4 mm in a temperature range of 130° C to 180° C.

14. Method according to one of claims 12 or 13, characterised in that usual additives are used in the case of manufacture of the reinforced polymer in the plastics processing industry.

15. Method according to claim 14, characterised in that the additives are the following: lubricant, plasticiser, plasticising agent, fillers, mould release agent, flame-retarding additives and/or defoaming agent.

## Revendications

1. Polymère biodégradable renforcé,
caractérisé par
de l'amidon thermoplastique non moussant ou un mélange polymère non moussant contenant de l'amidon thermoplastique et au moins un polymère biodégradable hydrophobe, renforcé au moyen de fibres naturelles qui sont intégrées dans le polymère, l'amidon thermoplastique contenant des agents gonflants ou plastifiants, à l'exception d'eau, et le polymère étant obtenu par traitement ou intégration et combinaison des fibres naturelles dans la masse fondue et à une humidité inférieure à 1 % en poids dans l'amidon thermoplastique.

2. Polymère renforcé selon la revendication 1,
caractérisé en ce que
le polymère est renforcé au moyen d'une fibre naturelle, qui est l'une des fibres suivantes : ramie, coton, jute, chanvre, sisal, lin, soie, abaca et/ou leurs mélanges.

3. Polymère renforcé selon l'une des revendications 1 ou 2,
caractérisé en ce que
des fibres de ramie sont intégrées dans le polymère biodégradable.

4. Polymère renforcé selon l'une des revendications 1 à 3,
caractérisé par
une proportion de 5 à 30 % en poids de fibres.

5. Polymère renforcé selon l'une des revendications 1 à 4,
caractérisé en ce que
le polymère biodégradable est un mélange polymère contenant de l'amidon thermoplastique et au moins l'un des polymères suivants :
• dérivé de cellulose ayant un degré de substitution de 2 ;
• polyester aliphatique ;
• protéine hydrophobe et/ou ;
• alcool polyvinylique préparé par hydrolyse à moins de 100 % d'acétate de polyvinyle.

6. Polymère renforcé selon la revendication 5,
caractérisé en ce que
le dérivé de cellulose est un éther de cellulose, un ester de cellulose ou un de leurs esters mixtes.

7. Polymère renforcé selon la revendication 5,
caractérisé en ce que
le polyester aliphatique est la polycaprolactone, l'acide polyhydroxybutyrique, un copolymère acide polyhydroxybutyrique/acide hydroxyvalérique ou l'acide polylactique.

8. Polymère renforcé selon la revendication 5,
caractérisé en ce que
la protéine hydrophobe est la zéine.

9. Polymère renforcé selon la revendication 5,
caractérisé en ce que
l'alcool polyvinylique est obtenu par une hydrolyse à moins de 100 % d'acétate de polyvinyle avec un degré d'hydrolyse d'environ 88 %.

10. Polymère renforcé selon l'une des revendications 5 à 9,
caractérisé en ce que
le mélange polymère contient en outre un agent de transfert de phase, l'agent de transfert de phase étant à l'origine du couplage moléculaire de la phase amidon avec la phase polymère hydrophobe.

11. Polymère renforcé selon l'une des revendications 1 à 10,
caractérisé en ce qu'
il s'agit d'un mélange polymère constitué d'amidon thermoplastique et de polycaprolactone, qui est renforcé avec des fibres de ramie et/ou de sisal.

12. Procédé de fabrication d'un polymère non moussant biodégradable renforcé,
caractérisé en ce qu'
on mélange l'amidon thermoplastique ou un mélange polymère l'amidon thermoplastique et un polymère biodégradable hydrophobe, dans un intervalle de température de 100°C à 200°C avec 5 à 30 % en poids de fibres naturelles, l'amidon thermoplastique contenant un agent gonflant ou un agent plastifiant, à l'exception de l'eau, et présentant une humidité lors du traitement ou de l'introduction et de la combinaison avec les fibres naturelles inférieure à 1 % en poids, et où les fibres naturelles sont l'une des suivantes : ramie, coton, jute, chanvre, sisal, lin, soie, abaca et/ou leurs mélanges.

13. Procédé selon la revendication 12,
caractérisé en ce qu'
on mélange de l'amidon thermoplastique contenant de 20 à 35 % en poids, par rapport au poids du mélange de glycérine ou de sorbitol ou à un de leurs mélanges, comme plastifiant ou agent plastifiant avec de 5 à 30 % en poids, par rapport au poids total du polymère de renforcement, de fibres de ramie ou de sisal ayant une longueur de fibre de 0,08 à 4 mm dans un intervalle de température de 130°C à 180°C.

14. Procédé selon la revendication 12 ou 13,
caractérisé en ce que
dans la fabrication du polymère renforcé on utilise des additifs habituels dans l'industrie de la transformation des matières plastiques.

15. Procédé selon la revendication 14,
caractérisé en ce que
les additifs sont les suivants : lubrifiant, ramollissant, plastifiant, charge, agent de démoulage, additifs ignifuges et/ou antimousses.
